# EUROPEAN PATENT APPLICATION

(11) **EP 2 832 973 A1**
(43) Date of publication of application: **04.02.2015**
(21) Application number: 14177365.5
(22) Date of filing: 17.07.2014
(51) Int. Cl.: F02C 7/045, F02K 1/82, B64D 33/02

(54) **Acoustic liner**

(30) Priority: 01.08.2013 GB 201313771
(71) Applicant: Rolls-Royce plc, London SW1E 6AT (GB)
(72) Inventor: Kempton, Andrew, Derby, Derbyshire DE72 2HA (GB)
(74) Representative: Hawtree, John

(57) **Abstract**

A gas turbine engine (10) comprising a fan (14) and an acoustic absorption intake and/or fan case liner (40). The liner (40) comprises at least four liner sections (42) demarcated by circumferentially spaced inhomogeneities (50). The inhomogeneities (50) cause scattering of a fan tone acoustic field when the gas turbine engine (10) is in use.

## Description

The present invention relates to gas turbine engines, acoustic absorption intake and/or fan case liners, acoustic absorption intake and/or fan case liner sections, methods of reducing fan noise leaving the nacelle of a gas turbine engine and methods of designing a portion of a gas turbine engine. The invention may be particularly applicable to splices located between liner pieces, each liner piece comprising a separate component to be linked and attached directly or indirectly to the fan case or intake of a gas turbine engine. The application of the invention is not however limited to splices and may for example also be applicable to other inhomogeneities demarcating liner sections.

Historically liners have two or three circumferential pieces with axially extending splices there between. The liner pieces are positioned around the circumference of the engine intake and are designed to absorb a proportion of the fan acoustic field propagating along the intake.

A blade passing component of a fan tone acoustic field propagates with a fundamental frequency equal to the number of blades in the fan multiplied by the rotational frequency of the fan. A further buzz frequency component may occur when the blade tips approach or exceed the speed of sound, with a fundamental frequency equal to the rotational frequency of the fan. Additional harmonic frequencies may also be present in the field at integer multiples of the fundamental frequencies. Components of the fan acoustic field also have particular modes (field pattern shapes). Modes are characterised by an azimuthal pattern variation, designated m and a radial pattern variation, n. By way of example, the azimuthal pattern variation of the fundamental frequency corresponding to blade passing is often dominated by modes with m equal to the number of blades in the fan.

The splices cause additional noise by scattering the sound field into modes that are attenuated less well by the liner.

Liners without splices (zero-splice liners) are considered ideal from an acoustic perspective and can often be made, but are expensive and difficult to manufacture. Zero-splice liners are also more difficult to maintain. Indeed it may be impractical to manufacture, transport, install and/or maintain a zero-splice liner for larger diameter engines. Therefore designers often incorporate some splices, but try to keep their number to a minimum so as to limit the reduction in effective liner area.

According to a first aspect of the invention there is provided a gas turbine engine comprising optionally a fan and optionally an acoustic absorption intake and/or fan case liner, the liner optionally comprising at least four liner sections optionally demarcated by circumferentially spaced inhomogeneities, where the inhomogeneities optionally cause scattering of a fan acoustic field when the gas turbine engine is in use.

Although at least four liner sections have been specified above it may be that there are at least five, six, seven, eight, nine, ten, eleven, twelve, thirteen, fourteen, fifteen, sixteen, seventeen, eighteen, nineteen, twenty or more liner sections.

The inhomogeneities may be considered to be an interruption or discontinuity of the regular pattern defined by a liner section. A liner section is not necessarily therefore a liner piece (i.e. a structurally independent component to be joined with others to form the liner). There may therefore be several liner sections within a single liner piece, the liner sections being demarcated by inhomogeneities either side of the structural pattern within each liner section. Alternatively, if inhomogeneities are only present at the circumferential limits of the liner piece, that liner piece would be commensurate with a liner section. In any case the inhomogeneities may be joins between liner sections. Further inhomogeneities may be features which have different acoustic properties to the majority of the liner.

Increasing the number of liner sections (and therefore inhomogeneities) may cause improved attenuation of noise as it propagates within a gas turbine engine nacelle.

A mode of vibration propagating along a waveguide (in this case inside the fan case) is a solution to the wave equation. The boundary conditions imposed by the waveguide mean that there is a minimum frequency for a particular mode at which it can propagate (the cut-on frequency for that mode). Modes with less azimuthal pattern variation (m) have lower cut-on frequencies (i.e. the frequency can be lower and yet that mode would still be cut-on and would propagate). Modes with greater azimuthal pattern variation (m) have higher cut-on frequencies and are therefore more susceptible to being cut-off (the relevant fan acoustic field component must have a higher frequency for these modes to propagate).

In the case of a gas turbine fan case, if the fan tone acoustic field can be scattered into modes with greater azimuthal pattern variation, the cut-on frequency for those modes may be above the frequency of the fan tone acoustic field component. In this way the scattered modes may be attenuated (prevented from propagating by virtue of having insufficient frequency), reducing the noise leaving the nacelle. The effect of increasing the azimuthal pattern variation in a scattering event may be visualised as increasing the angle of propagation relative to the main axis of the intake, resulting in a longer path length out of the engine.

It has been found that in the case of a gas turbine engine with N inhomogeneities around the liner, the possible azimuthal pattern variations (m) of the scattered acoustic modes from the blade passing component of the fan tone acoustic field, obey the equation: m = B + kN, where B is the number of blades in the fan and k can take any positive or negative integer value. Consequently as N is increased, the number of modes produced during scattering with |m| below a number required in order that the resulting mode will be cut-on, may be reduced. That is, with increasing numbers of inhomogeneities, the general trend may be an increase in the |m| values of the modes that are produced during scattering. These modes therefore have higher cut-on frequencies, making it more likely that the fundamental frequency produced by blade passing will be insufficient for those modes to propagate. Although not discussed substantively herein, it will be appreciated that a similar effect may occur with respect to the scattered modes of the buzz frequency. That is that the modulus of the scattered modes of the buzz frequency may also tend to be higher with increasing inhomogeneity number, making it more likely that the fundamental frequency produced by the rotational frequency of the fan will be insufficient for those modes to propagate.

The first aspect may therefore offer at least some of the benefit of a zero-splice liner without the manufacturing and maintenance disadvantages of such systems.

In some embodiments the inhomogeneities are equally circumferentially spaced.

In some embodiments the liner may be provided in two or more separate liner pieces. In this case the liner pieces may be discrete, structurally independent components that may be joined to form a single liner.

In some embodiment at least some of the inhomogeneities may be splices joining the liner pieces. Additionally or alternatively some or all inhomogeneities may be one or more bolts or other joining components connecting one or more liner pieces to the fan case or another underlying structure. Additionally or alternatively each inhomogeneity may be a side wall of the particular liner section.

In some embodiments one or more of the inhomogeneities extends axially for the full length of the liner.

In some embodiments there are at least twice as many inhomogeneities as blades in the fan. The provision of twice the number of inhomogeneities to fan blades is the lowest number of inhomogeneities for which the lowest |m| of the scattered field for the blade passing component of the fan tone acoustic field will be equal to or greater than the m of the pre-scattering propagation mode.

In some embodiments the number of inhomogeneities corresponds to the number necessary such that modes produced as a result of scattering the blade passing component of the fan tone acoustic field have a cut-on frequency (within the fan case) above the blade passing fundamental acoustic frequency produced by the fan in a particular range of operating regimes.

In this way the number of splices may be selected so as to be sufficient to reduce noise at particular rotation velocities of the fan. It may be for example that it is unrealistic or unnecessary to reduce noise at very high fan rotation velocities, but realistic and desirable at lower fan rotational velocities. In this way the number of inhomogeneities may be selected to produce the desired effect without unnecessarily further increasing the number of inhomogeneities.

The particular range of operating regimes may be up to 100% of fan maximum rated rotation velocity, or up to substantially 80%, 60%, 50%, 40%, 20% or 10% of fan maximum rated rotation velocity.

In some embodiments the number of inhomogeneities corresponds to the number necessary such that modes produced as a result of scattering the blade passing component of the fan tone acoustic field have a cut-on frequency (within the fan case) above the blade passing second harmonic acoustic frequency produced by the fan in a particular operating regime. The second harmonic may be a significant source of noise and so may be targeted in addition to the fundamental frequency. The particular operating regime may vary as per the description above.

In some embodiments the number of inhomogeneities corresponds to the number necessary such that modes produced as a result of scattering the blade passing component of the fan tone acoustic field have a cut-on frequency (within the fan case) above the blade passing third harmonic acoustic frequency produced by the fan in a particular operating regime. The third harmonic may be a significant source of noise and so may be targeted in addition to the fundamental frequency and second harmonic. The particular operating regime may vary as per the description above.

In some embodiments the gas turbine engine is capable of rotating the fan so as the tips of the fan blades exceed Mach 1. In alternative embodiments the gas turbine engine is capable of rotating the fan so as the tips of the fan blades exceed approximately 80% of Mach 1.
According to a second aspect of the invention there is provided a liner according to the first aspect.

According to a third aspect of the invention there is provided a liner section according to the first aspect. The liner section may for example be dimensioned and shaped so as at least four are required to form a circumferentially enclosed cavity.

According to a fourth aspect of the invention there is provided a method of reducing fan noise leaving the nacelle of a gas turbine engine, the method comprising optionally scattering a component of a fan tone acoustic field optionally with azimuthal pattern variation equal to the number of blades in the fan, optionally into modes with only the same or a higher azimuthal pattern variation. This may be achieved by providing a number of scattering surface locations at least double the number of blades. In this way the cut-on frequencies of the scattered modes may be above the blade passing fundamental frequency of the fan tone acoustic field for a particular range of fan operating regimes.

According to a fifth aspect of the invention there is provided a method of designing a portion of a gas turbine engine comprising optionally a fan and optionally a fan case, the method comprising optionally selecting the number and/or arrangement of scattering locations in at least a portion of the fan case optionally so that a component of a fan tone acoustic field scattered by the scattering locations has modes of vibration with cut-on frequencies above the fundamental frequency of the component of the fan tone acoustic field optionally for a particular range of fan operating regimes.

The particular range of operating regimes may be up to 100% of fan maximum rated rotation velocity, or up to substantially 80%, 60%, 50%, 40%, 20% or 10% of fan maximum rated rotation velocity.

In some embodiments the fan tone acoustic field scattered by the scattering locations has modes of vibration with cut -on frequencies above the second harmonic frequency of the component of the fan tone acoustic field for a particular range of fan operating regimes. The second harmonic may be a significant source of noise and so may be targeted in addition to the fundamental frequency. The particular operating regime may vary as per the description above.

In some embodiments the fan tone acoustic field scattered by the scattering locations has modes of vibration with cut-on frequencies above the third harmonic frequency of the component of the fan tone acoustic field for a particular range of fan operating regimes. The third harmonic may be a significant source of noise and so may be targeted in addition to the fundamental frequency and second harmonic. The particular operating regime may vary as per the description above.

In some embodiments the arrangement of the scattering locations is selected so as they are equally circumferentially spaced.

In some embodiments the method further comprises increasing the number of scattering locations as the particular range of fan operating regimes increases.

In some embodiments the number of scattering locations is selected to be at least equal to twice the number of blades in the fan.

The skilled person will appreciate that a feature described in relation to any one of the above aspects of the invention may be applied mutatis mutandis to any other aspect of the invention.

Embodiments of the invention will now be described by way of example only, with reference to the Figures, in which:
Figure 1 is a sectional side view of a gas turbine engine;
Figure 2 is a longitudinal cross-sectional view through a portion of an acoustic absorption liner according to an embodiment of the invention;
Figure 3 is a cross-sectional view through the line A-A of Figure 2.

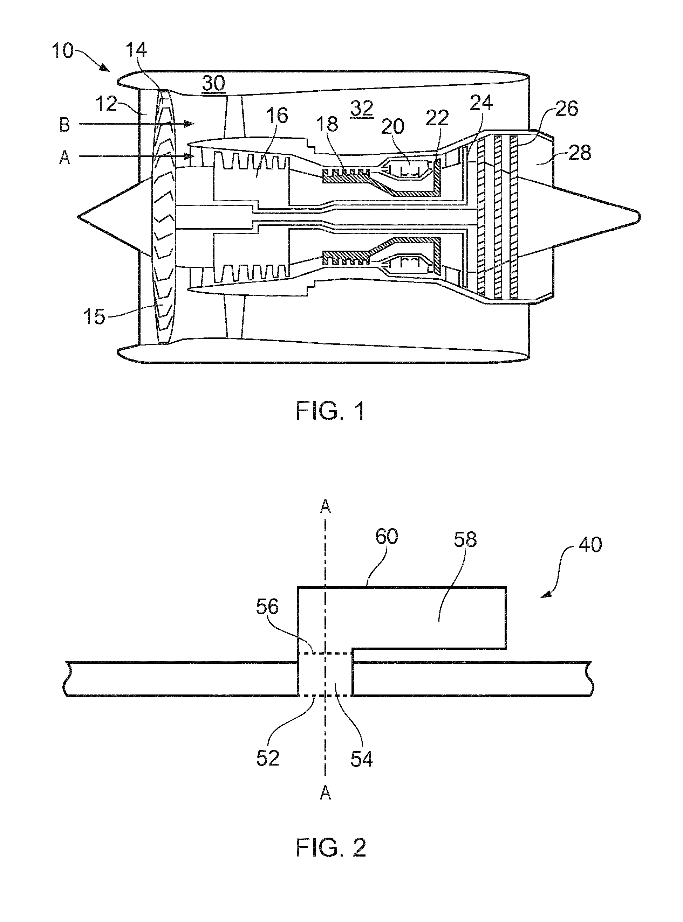

A gas turbine engine 10 is shown in Figure 1 and comprises an air intake 12 and a propulsive fan 14 comprising multiple fan blades 15, the fan 14 generating two airflows A and B. The gas turbine engine 10 comprises, in axial flow A, an intermediate pressure compressor 16, a high pressure compressor 18, a combustor 20, a high pressure turbine 22, an intermediate pressure turbine 24, a low pressure turbine 26 and an exhaust nozzle 28. A nacelle 30 surrounds the gas turbine engine 10 and defines, in axial flow B, a bypass duct 32.

Between the nacelle 30 and fan 14 is typically located a fan case (not shown) which may prevent release of fan blades 15 from the nacelle 30 in the event of failure. The inner wall of the fan case (not shown) would typically be provided with an acoustic absorption liner (not shown). The liner (not shown) may be arranged to absorb a proportion of the fan tone acoustic field propagating back through the air intake 12.

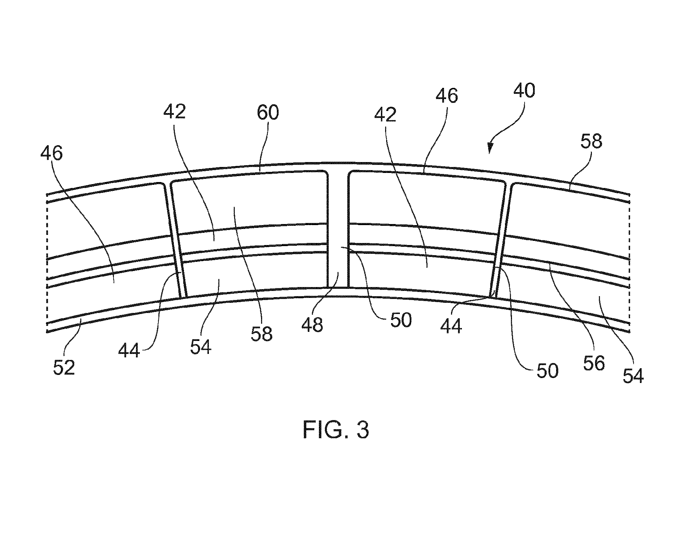

Referring now to Figures 2 and 3 a portion of a liner is generally shown at 40. The liner 40 comprises an array of axially extending boxes 42 (or liner sections) disposed circumferentially around the liner 40. Each box 42 is demarcated from its two neighbouring boxes 42 by a side wall 44. The side walls 44 are acoustically 'hard' and so they would reflect or scatter incident acoustic waves. A number of neighbouring boxes 42 are intrinsically joined at their side walls and collectively form distinct liner pieces 46. The liner 40 comprises four separate liner pieces 46 (only parts of two such liner pieces 46 are shown), each liner piece 46 being joined to two other liner pieces by axially extending splices 48. Together the liner pieces 46 therefore form an annulus. The annulus is fitted radially inward of or as part of the fan case (not shown). Like the side walls 44, each splice 48 demarcates two liner sections from each other, and both the side walls 44 and the splices 48 constitute inhomogeneities 50, which interrupt the regular pattern defined by each liner section. The inhomogeneities 50 are substantially equally circumferentially spaced and constitute scattering locations for acoustic waves.

At its innermost radial extent the liner 40 has a circumferentially extending first perforated sheet 52. Radially outward of the perforated sheet 52, each box 42 is provided with a honeycomb portion 54 comprising a regular array of honeycomb cells (not shown). The honeycomb portions 54 in neighbouring boxes 42 are separated by the side walls 44 or splices 48. Radially outward of each honeycomb portion 54 each box is provided with a second perforated sheet 56. Radially outward of the second perforated sheet 56 each box 42 is provided with a void 58 which extends axially beyond the axial extent of the honeycomb portion 54. The combination of each honeycomb portion 54 and its corresponding void 58 give each box 42 a substantially 'L-shaped' volume (as best seen in Figure 2). Radially inward of the void 58, each box 42 is provided with a base wall 60. At the intersection of the base walls 60 of neighbouring boxes 42 in the same liner piece 46, a side walls 44 extends radially inwards. At the intersection of the base walls 60 of neighbouring boxes 42 in different liner pieces 46, a splice 48 extends radially inwards.

In use the fan 14 produces a fan acoustic field which propagates inside the fan case (not shown) towards the air intake 12. The a component of the acoustic field corresponding to the blade passing frequency will have a mode with an azimuthal pattern variation m equal to the number of blades 15 in the fan 14 (in this case twenty four). The fundamental frequency of propagation of the acoustic field component will be equal to the number of blades 15 multiplied by the fan 14 rotational velocity. Propagation of the acoustic field component may also occur at harmonic frequencies associated with the blade passing fundamental frequency. The liner 40, specifically the first 52 and second 56 perforated sheets, the honeycomb portions 54 and the voids 58, are tailored to attenuate acoustic waves propagating in the aforementioned mode and frequencies. The inhomogeneities 50 (side walls 44 and splices 48) reduce the effectiveness of this attenuation by scattering the acoustic field into modes that are not attenuated so well by the liner 40.

Scattering events occurring at the inhomogeneities 50 (or scattering locations) are predictable in character. The scattered field of the blade passing component of the acoustic field will retain the frequency of propagation as determined by the fan blade 15 number and rotational velocity of the fan 14, but the mode of vibration will change into modes with an azimuthal pattern variation obeying the equation: m = B + kN, where B is the number of blades 15 in the fan 14, N is the number of inhomogeneities 50 and k can take any positive or negative integer value.

The fan case (not shown) provides a wave guide which places boundary conditions on the way that the acoustic field can propagate. Consequently modes of vibration will not propagate if the frequency is below a cut-on frequency for that mode. Modes with greater |m| have higher cut-on frequencies and are therefore more susceptible to being cut-off (attenuated). In accordance with the equation mentioned above, an increase in the number of inhomogeneities 50 will in general increase the likelihood of scattered acoustic field components being attenuated.

The nature of the equation means that a single inhomogeneity tends to give rise to the least attenuation, since every possible m number below the blade 15 number may be produced. Of these the modes with the lowest |m| numbers will be more likely to propagate, having the lowest cut-on frequencies. Two inhomogeneities is marginally better, as modes with either even or odd m numbers (depending on the blade 15 number) are not produced. Nonetheless there are still a relatively high number of modes with low |m| number produced.

Attenuation will in general improve with increasing inhomogeneity 50 number N. There may however be retrograde areas at least in some fan 14 operating ranges. For example, a twenty four blade fan and a liner with sixteen inhomogeneities may in some circumstances provide better attenuation than a combination of a twenty four blade fan and a liner with twenty three inhomogeneities. In the former case the lowest |m| number produced would be eight, whereas in the latter case the lowest |m| number produced would be one. If the frequency of the fan acoustic field is at a particular level, the |m| = 8 modes may be cut-off, whereas the frequency may still be sufficient to allow |m| = 1 mode propagation.

Only with N ≥ 2B must the |m| numbers produced during scatter equal or exceed the original azimuthal pattern variation (m) of the pre-scattered acoustic field mode of propagation for the blade passing frequency component. N = 2B+4 may therefore be particularly advantageous. Further increases in the number of inhomogeneities 50 may further increase noise attenuation where such increases result in additional modes with cut-on frequencies above the frequency produced by the fan 14. In particular, increases in inhomogeneity number may prevent additional modes from propagating at the harmonics of the fundamental frequency produced by the fan 14. Nonetheless the benefit may diminish as the number of inhomogeneities increases further, as higher harmonics will have lower amplitude. There may therefore be a trade-off between acoustic attenuation benefit and additional weight or complexity resulting from use of additional inhomogeneities.

As will be appreciated the frequency of propagation of components of the fan tone acoustic field will depend on the operational condition of the fan 14 (i.e. it's rotational velocity), and this in turn will determine which scattered modes will be cut-on for a given number of inhomogeneities 50. Nonetheless in anticipation of this the design of the liner 40 may include calculation of the number of inhomogeneities 50 required in order that the |m| numbers produced during scattering are sufficiently high to cause mode cut-off over a particular operating regime of the fan 14.

For illustrative purposes the description above focusses on attenuation of the blade passing frequency component of the fan tone acoustic field (that is the field component resulting from the passage of each blade past a particular point, and having a frequency equal to the rotational frequency of the rotor multiplied by the number of blades). As will be appreciated however, the invention may lead to similar acoustic attenuation increases in further components of the fan tone acoustic field. By way of example the fan tone acoustic field may include an additional component known as the buzz frequency. This may correspond to a part of the field having a fundamental frequency equal to the rotational frequency of the fan. As with the blade passing component, attenuation of the buzz frequency may be increased by the use of the additional inhomogeneities, As with the blade passing component the buzz frequency will propagate with a particular mode which will be scattered up in a scattering event with an inhomogeneity. As before, with a higher |m| number the likelihood of the scattered field component being cut-on will be reduced; the frequency of propagation being less likely to be sufficient for propagation of the field with higher |m| number after scattering.

It will be understood that the invention is not limited to the embodiments above-described and various modifications and improvements can be made without departing from the various concepts described herein. Any of the features may be employed separately or in combination with any other features and the invention extends to and includes all combinations and sub-combinations of one or more features described herein in any form of acoustic absorption liner.

## Claims

1. A gas turbine engine comprising a fan and an acoustic absorption intake and/or fan case liner, the liner comprising at least four liner sections demarcated by circumferentially spaced inhomogeneities, where the inhomogeneities cause scattering of a fan acoustic field when the gas turbine engine is in use.

2. A gas turbine engine according to claim 1 where the inhomogeneities are equally circumferentially spaced.

3. A gas turbine engine according to claim 1 or claim 2 where the liner is provided in two or more separate liner pieces.

4. A gas turbine engine according to any preceding claim where at least some of the inhomogeneities are splices joining the liner pieces.

5. A gas turbine engine according to any preceding claim where one or more of the inhomogeneities extends axially for the full length of the liner.

6. A gas turbine engine according to any preceding claim where there are at least twice as many inhomogeneities as blades in the fan.

7. A gas turbine engine according to any preceding claim where the number of inhomogeneities corresponds to the number necessary such that modes produced as a result of scattering a blade passing component of the fan tone acoustic field have a cut-on frequency above the blade passing fundamental acoustic frequency produced by the fan in a particular range of operating regimes.

8. A gas turbine engine according to claim 7 where the range of the operating regime is up to any one of the following:
a) 100% of fan maximum rated rotation velocity;
b) 80% of fan maximum rated rotation velocity;
c) 60% of fan maximum rated rotation velocity;
d) 50% of fan maximum rated rotation velocity;
e) 40% of fan maximum rated rotation velocity;
f) 20% of fan maximum rated rotation velocity;
g) 10% of fan maximum rated rotation velocity.

9. A gas turbine engine according to any preceding claim where the number of inhomogeneities corresponds to the number necessary such that modes produced as a result of scattering the blade passing component of the fan tone acoustic field have a cut-on frequency above the blade passing second harmonic acoustic frequency produced by the fan in a particular operating regime.

10. A gas turbine engine according to any preceding claim where the number of inhomogeneities corresponds to the number necessary such that modes produced as a result of scattering the blade passing component of the fan tone acoustic field have a cut-on frequency above the blade passing third harmonic acoustic frequency produced by the fan in a particular operating regime.

11. A gas turbine engine according to any preceding claim capable of rotating the fan so as the tips of the fan blades exceed Mach 1.

12. A liner in accordance with the liner of any of claims 1 to 11.

13. A liner section in accordance with the liner of any of claims 1 to 11.

14. A method of reducing fan noise leaving the nacelle of a gas turbine engine, the method comprising scattering a component of a fan tone acoustic field with azimuthal pattern variation equal to the number of blades in the fan, into modes with only the same or a higher azimuthal pattern variation.

15. A method of designing a portion of a gas turbine engine comprising a fan and a fan case, the method comprising selecting the number and/or arrangement of scattering locations in at least a portion of the fan case so that a component of a fan tone acoustic field scattered by the scattering locations has modes of vibration with cut-on frequencies above the fundamental frequency of the component of the fan tone acoustic field for a particular range of fan operating regimes.
